# EUROPEAN PATENT APPLICATION

(11) **EP 1 947 791 A2**
(43) Date of publication of application: **23.07.2008**
(21) Application number: 07117066.6
(22) Date of filing: 24.09.2007
(51) Int. Cl.: H04H 60/25, H04H 60/72

(54) **Digital broadcasting receiver and control method thereof**

(30) Priority: 16.01.2007 KR 20070004734
(71) Applicant: Samsung Electronics Co., Ltd., Suwon-si, Gyeonggi-do 442-743 (KR)
(72) Inventor: Kim, Jung Su, Gyeonggi-do (KR); Kim, Hyoung Nam, Suwon-si Gyeonggi-do (KR); Lee, Dong Youn, Seoul (KR); Jeon, Jae Wook, Seoul (KR)
(74) Representative: D'Halleweyn, Nele Veerle Trees Gertrudis

(57) **Abstract**

A digital broadcasting receiver and a control method thereof. The method includes determining whether it is necessary to display a screen saver image on a display unit connected to the digital broadcasting receiver, and displaying the screen saver image on the display unit when it is necessary to display the screen saver image while receiving digital broadcasting signals to update EPG information.

## Description

### BACKGROUND OF THE INVENTION

### 1. Field of the Invention

The present general inventive concept relates to a digital broadcasting receiver and a control method thereof, and more particularly, to a digital broadcasting receiver and a control method thereof, capable of updating EPG information of each channel during output of a screen saver.

### 2. Description of the Related Art

A digital broadcasting receiver is an appliance equipped with a tuner for receiving digital broadcasting signals. A conventional digital broadcasting receiver extracts EPG (electronic program guide) information from digital broadcasting signals and then displays the EPG information as requested by a user, for the convenience of the user.

That is, as disclosed in Korean Patent Unexamined Publication No. 2005-28823, the conventional digital broadcasting receiver receives EPG information and stores the EPG information in a memory. Then, when the user operates an EPG button, the conventional digital broadcasting receiver displays the EPG information so as to provide a user with programs to be broadcasted.

At this time, the EPG information includes EIT (event information table having titles of programs) and ETT (extended text table having details of programs such as plots, background, etc). The EIT may include program guide information of 16 days in maximum.

However, according to the above conventional digital broadcasting receiver, the tuner only receives digital broadcasting signals of a channel selected by the user, so EPG information of other channels cannot be updated although the EPG information of the channel selected by the user can be continuously updated. Thus, precision of the EPG information, except for the EPG information of the channel selected by the user, may be degraded as times go by, so that wrong program information may be provided to the user.

### SUMMARY OF THE INVENTION

The present general inventive concept provides a digital broadcasting receiver and a control method thereof, capable of updating EPG information of each channel during output of a screen saver.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing a method of controlling a digital broadcasting receiver, the method including determining whether it is necessary to display a screen saver image on a display unit connected to the digital broadcasting receiver, and displaying the screen saver image on the display unit when it is necessary to display the screen saver image while receiving digital broadcasting signals to update EPG information.

The screen saver image may be displayed when an idle time, during which a user inputs no control command to the digital broadcasting receiver, exceeds a reference time and the digital broadcasting receiver receives no digital broadcasting signals.

The EPG information may be sequentially extracted from digital broadcasting signals of channels, which are received in the digital broadcasting receiver, and is stored in the digital broadcasting receiver.

The foregoing and/or other aspects and utilities of the present general inventive concept may also be achieved by providing a digital broadcasting receiver including a tuner to receive digital broadcasting signals, a controller to display a screen saver image on a display unit when it is necessary to display the screen saver image while allowing the tuner to receive the digital broadcasting signals in order to extract EPG information from the digital broadcasting signals, and a memory to store the EPG information.

The digital broadcasting receiver may include a set-top box and an optical recoding/reproducing apparatus equipped with the tuner.

The digital broadcasting receiver may further include a remote signal receiver and an input unit, and the controller may determine that it is necessary to display the screen saver image when an idle time, during which a remote signal is not received in the remote signal receiver and the input unit is not operated, exceeds a reference time and the tuner is not operated.

The tuner may sequentially receive the digital broadcasting signals from each channel.

The foregoing and/or other aspects and utilities of the present general inventive concept may also be achieved by providing a digital broadcasting receiver including a controller to determine whether it is necessary to display a screen saver image on a display unit, and to display the screen saver image on the display unit when it is necessary to display the screen saver image while receiving digital broadcasting signals to update EPG information.

The foregoing and/or other aspects and utilities of the present general inventive concept may also be achieved by providing a digital broadcasting receiver including a controller to generate a power save image, to receive broadcasting signals of channels during generating the power same image, and to extract EPG information from the respective broadcasting signals of the respective channels, according to an idle time.

The foregoing and/or other aspects and utilities of the present general inventive concept may also be achieved by providing a digital broadcasting receiver including a tuner, and a controller to control the tuner to receive broadcasting signals of channels according to an idle time, and to extract EPG information from the received broadcasting signals.

The idle time may be a time period during which the tuner is controlled to receive the broadcasting signals of the channels.

The idle time may be a time period during which a control command is not input to control at least one of the tuner and the controller.

The digital broadcasting receiver may further include an input unit to generate a control command to control one of the tuner and the controller, and the controller may determine the idle time according to existence of the control command.

The controller may generate a power save image and determines to control the tuner to receive the broadcasting signals of the channels, according to the idle time.

The controller may simultaneously generate the power save image and control the tuner to receive the broadcasting signals of the channels.

The controller may determine the idle time according to a state of the power save image.

The digital broadcasting receiver may further include an output terminal connectable to an external display to display an image corresponding to at least one of the power saver image and the broadcasting signals.

The digital broadcasting receiver may further include a display to display at least one of the power save image, an image corresponding to at least one of the broadcasting signals, and the EPG information of the respective channels.

The digital broadcasting receiver may further include at least one medium driver to generate a video signal; and an output terminal to output a signal corresponding to one of the tuner, the at least one medium driver, and the controller, and the controller may determine the idle time according to a state of the signal to be output through the output terminal.

The digital broadcasting receiver may further include an encoder to encode at least one of the video signal of the at least one medium and one of the broadcasting signals of the tuner, and to output the encoded one, and the controller may determine the idle time according to a state of the encoded one.

The at least one medium driver may include a DVD driver, an HDD, a memory, and a DV processor.

The digital broadcasting receiver may further include at least one medium driver to generate a video signal; and wherein the controller determines the idle time according to existence of a signal generating according to the video signal of the at least one medium driver and at least one of the broadcasting signals of the tuner.

The controller may control the tuner to receive one of the broadcasting signals to correspond to only one of the channels when the controller determines that it is not the idle time.

The controller may update previous EPG information of the respective channels with the extracted EPG information of the respective channels.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:
FIG. 1 is a block diagram illustrating a digital broadcasting receiver according to an embodiment of the present general inventive concept; and
FIG. 2 is a flowchart illustrating a control method for a digital broadcasting receiver according to an embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

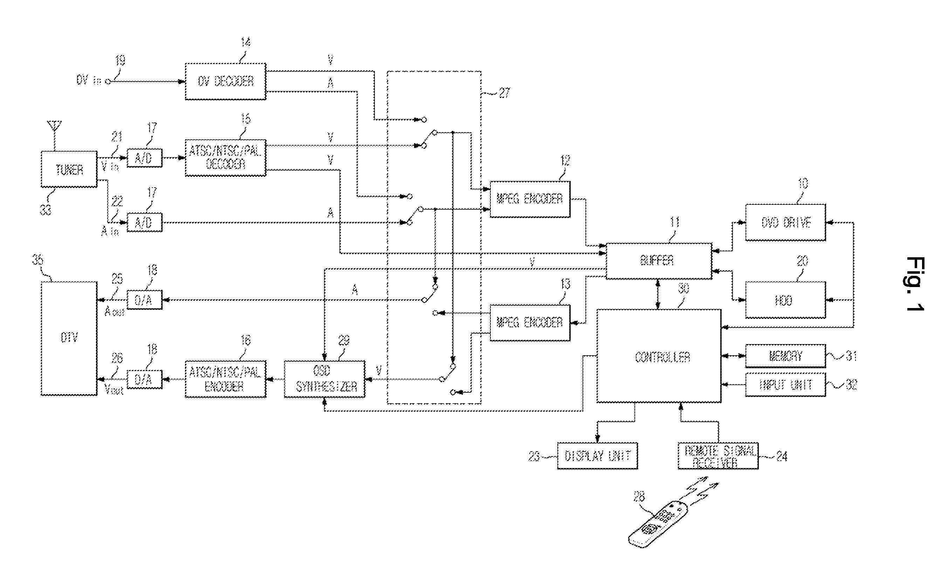

As illustrated in FIG. 1, a digital broadcasting receiver, such as a DVD recorder equipped with a tuner, according to one embodiment of the present general inventive concept, includes a plurality of input terminals 19, 21 and 22, a plurality of output terminals 25 and 26, a plurality of analog to digital (A/D) and digital to analog (D/A) converters 17 and 18, a DV decoder 14, an ATSC/NTSC/PAL decoder 15, and an ATSC/NTSC/PAL encoder 16.

Here, the digital broadcasting receiver receives digital broadcasting signals containing EPG information. However, the present general inventive concept is not limited thereto. A broadcasting receiver can be used as the digital broadcasting receiver when the broadcasting receiver includes a tuner to receive channels containing EPG information and extracts EPF information from the received broadcasting signals.

In addition, the DVD recorder according to one embodiment of the present general inventive concept further includes a switching circuit 27, an MPEG encoder 12, an MPEG decoder 13, a tuner 33, a controller 30, a memory 31, an OSD (on screen display) synthesizer 29, a buffer 11, a DVD drive 10, and an HDD 20. The DVD recorder according to one embodiment of the present general inventive concept may further include a display unit 23, a remote signal receiver 24, and an input unit 32. The remote signal receiver 24 communicates with a remote controller 28 to receive a control signal to controller functions and operations of the DVD recorder.

The input terminals 19, 21 and 22 include a digital interface terminal DVin 19, a video input terminal 21, and an audio input terminal Ain 22. The digital interface terminal 19 receives AV data having a digital video (DV) format from an external DV apparatus. In addition, video signals of ATSC/NTSC/PAL formats transferred from the tuner 33 or a set-top box (not illustrated) are input into the video input terminal 21, and audio signals transferred from the tuner 33 or the set-top box are input into the audio input terminal 22.

Here, the set-top box may be used as a source of the video and audio signals of ATSC/NTSC/PAL formats to be input through the video and audio input terminals 21 and 22. The tuner 33 and the set-top box may be selectively or commonly connected to the video and audio input terminals 21 and 22 as the source of the video and audio signals of ATSC/NTSC/PAL formats.

The output terminals include an audio output terminal Aout 25 and a video output terminal Vout 26. The video output terminal 26 is connected to a digital TV (DTV) 35 to output video signals of ATSC/NTSC/PAL formats to the DTV 35, and the audio output terminal 25 is connected to the DTV 35 to transfer audio signals to the DTV 35.

The DV decoder 14 converts the AV data of the digital video format, which is input through the digital interface terminal DVin 19, into video and audio signals of ITU (international telecommunication union)-R BT formats. The ATSC/NTSC/PAL decoder 15 decodes a video signal of an ATSC format, which are input through the video input terminal 21, so as to transfer the decoded signals to the buffer 11, or converts video signals of NTSC/PAL formats, which are input through the video input terminal 21, so as to transfer the converted signals to the switching circuit 27. The ATSC/NTSC/PAL encoder 16 encodes or converts AV data streams having an ATSC format, which are output from the buffer 11, or video signals of ITU-R BT formats, which are output from the MPEG decoder 13, into video signals of NTSC/PAL formats.

The external DV apparatus and/or the DV decoder 14 may be referred to as a DV processor to generate the video and audio signals of ITU (international telecommunication union)-R BT formats. The external DV apparatus, the DV decoder 14, the DVD drive 10, and HDD 20 the may be referred to as a medium driver.

The switching circuit 27 transmits the video signals output from the ATSC/NTSC/PAL decoder 15 to the MPEG encoder 12 and the OSD synthesizer 29, or transmits the audio signals input into the audio input terminal Ain 22 to the MPEG encoder 12 and the audio output terminal Aout 25. In addition, the switching circuit 27 transmits the video signals output from the DV decoder 14 to the MPEG encoder 12 and the OSD synthesizer 29, and transmits the audio signals output from the DV decoder to the MPEG encoder 12 and the audio output terminal Aout 25. Further, the switching circuit 27 transmits a video signal output from the MPEG decoder 13 to the OSD synthesizer 29, and transmits an audio signal output from the MPEG decoder 13 to the audio output terminal Aout 25.

The MPEG encoder 12 compress-encodes the video signals of the ITU-R BT format and the ATSC format, and the audio signals of the DV decoder 14 or the AD converter 17, according to an MPEG-2 scheme, thereby creating one or more AV data streams. In contrast, the MPEG decoder 13 converts an AV data stream into video and audio signals of ITU-R BT formats.

The tuner 33 receives TV signals (digital broadcasting signals, etc) of a channel selected by the user. The controller 30 extracts EPG information from the digital broadcasting signals received in the tuner 33 and controls devices constituting the DVD recorder. In addition, the controller 30 creates an OSD image to be displayed on the DTV 35 connected to the DVD recorder, and then provides the OSD image to the OSD synthesizer 29.

The controller 30 controls the tuner 33 or the set-top box to receive the selected channel through a cable or an antenna connected to the tuner or the set-top box, and extracts the EPG information from the TV signals of the received channel. The TV signals of the selected channel may be transmitted to the controller 30 through, for example, the buffer 11 or the ATSC/NTSC/PAL decoder 15 and/or the MPEG encoder 12.

The memory 31 stores the EPG information extracted by the controller 30 and a screen saver image to be displayed on the DTV 35. If the image displayed on the DTV 35 is not changed for a long period of time, an image quality of the DTV 35 may be degraded. In order to solve this problem, a screen saver is employed in a computer monitor so as to prevent the image quality of the DTV 35 as the computer monitor from being degraded. Such a screen saver is disclosed in Korean Patent Unexamined Publication No. 2003-94483.

Upon receiving the OSD image from the controller 30, the OSD synthesizer 29 inserts the OSD image into the video signal such that the video signal having the OSD image can be displayed on the DTV 35. The buffer 11 temporarily stores the AV data streams therein. The DVD drive 10 records the AV data on a DVD disc mounted thereon or reads out the AV data from the DVD disc. The HDD 20 stores various data therein separately from the DVD drive 10 and stores the AV data on a hard disk mounted thereon or reads out the AV data from the hard disk.

The display unit 23 displays an operational state of the DVD recorder, and the remote signal receiver 24 receives a remote signal from the remote controller 28 and then transfers the remote signal to the controller 30. The input unit 32 includes a plurality of buttons so that the user can input various control commands using the input unit 32.

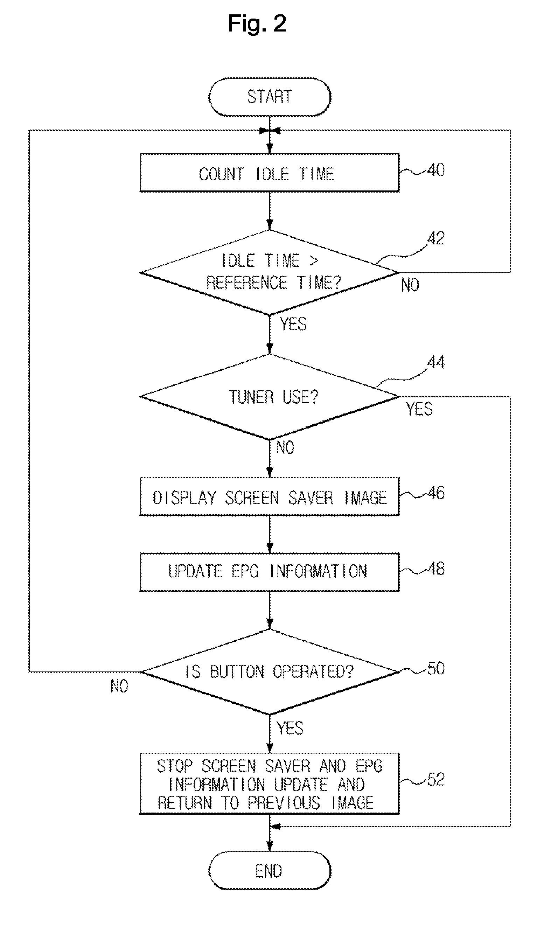

Hereinafter, a control method of a digital broadcasting receiver according to one embodiment of the present general inventive concept will be described with reference to FIGS. 1 and 2. When the digital broadcasting receiver, that is, the DVD recorder of FIG. 1, is turned on, the controller 30 checks the remote signal receiver 24 and the input unit 32, and counts an idle time. The idle time refers to a time interval during which a user inputs no control command into the DVD recorder using the remote controller 28 or buttons of the input unit 32 (operation 40). Then, the controller 30 determines whether the idle time exceeds a reference time (operation 42). At this time, the reference time can be previously stored in the memory 31. The user can manually change the reference time.

When the digital broadcasting receiver controls or generates a signal corresponding to an image to be displayed on the DTV 35 as a monitor, and receives the control command signal from an input device to control functions of the digital broadcasting receiver, the controller 30 may measure or count the idle time according to a transmission time of the signal, a detection of the control command signal, or a change of the signal.

If the idle time does not exceed the reference time, the control procedure returns to operation 40. If the idle time exceeds the reference time, the controller 30 determines whether the tuner 33 receives the digital broadcasting signal (operation 44). If it is determined in operation 44 that the tuner 33 receives the digital broadcasting signal, the control procedure ends. If it is determined in operation 44 that the tuner 33 does not receive the digital broadcasting signal, the controller 30 determines that it is necessary to display the screen saver, so that the screen saver image is displayed on the DTV 35 through the OSD synthesizer 29 (operation 46). The screen saver image is stored in a memory, for example, the memory 31.

In this manner, if the control command of the user is not input within the reference time, the controller 30 checks the operational state of the tuner 33 before displaying the screen saver image because there is a situation where it is not necessary to display the screen saver image even if the user does not input the control command using the remote controller 28 or the button of the input unit 32 within the reference time, such as a situation where the user watches TV.

If the screen saver is executed, the controller 30 controls the tuner 33 or the set-top box to sequentially receive digital broadcasting signals from each of available channels, and the controller 30 extracts the EPG information from the digital broadcasting signals transferred to the buffer and then sends the EPG information to the memory 31. Thus, the EPG information of the digital broadcasting signals received in the tuner 33 or the set-top box is stored in the memory 31 in a channel unit, and old EPG information is replaced with new EPG information so that, the EPG information is updated.

The available channels may include channels transmitted to the tuner 33 or the set-top box from an external apparatus. The format of the channels may be one of ATSC/NTSC/PAL formats. However, the present general inventive concept is not limited thereto.

Then, the controller 30 determines whether the user operates the remote controller 28 or the button of the input unit 32 (operation 50). If it is determined in operation 50 that the user does not operate the remote controller 28 or the button of the input unit 32, the control procedure returns to operation 40. If it is determined in operation 50 that the user operates the remote controller 28 or the button of the input unit 32, the controller 30 stops the display of the screen saver image, and controls the tuner 33 not to receive the digital broadcasting signals, so that the image displayed on the DTV 35 before the screen saver image is again appeared on the DTV 35 (operation 52).

In this manner, after the EPG information of each channel has been updated, if the user operates the EPG button of the remote controller 28, the latest EPG information is output from the memory 31 and then displayed on the DTV 35 by means of the controller 30.

The present general inventive concept can also be embodied as computer-readable codes on a computer-readable medium. The computer-readable medium can include a computer-readable recording medium and a computer-readable transmission medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although the present general inventive concept has been described in relation to the DVD recorder equipped with the tuner 33 serving as the digital broadcasting receiver, this is illustrative purpose only, and the present general inventive concept can be applied to various appliances (for instance, a set-top box) equipped with the tuner for receiving the digital broadcasting signal, in addition to the DVD recorder.

As described above, according to the present general inventive concept, the EPG information of each channel can be updated by using the tuner which is not used while the screen saver image is being displayed. As a result, precision of the EPG information of each channel stored in the digital broadcasting receiver can be improved. Thus, it is possible to precisely provide the user with the programs to be broadcasted as requested by the user.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A method of controlling a digital broadcasting receiver, the method comprising:
determining whether it is necessary to display a screen saver image on a display unit connected to the digital broadcasting receiver; and
displaying the screen saver image on the display unit when it is necessary to display the screen saver image while receiving digital broadcasting signals to update EPG information.

2. The method of claim 1, wherein the screen saver image is displayed when an idle time, during which a control command is not input to the digital broadcasting receiver, exceeds a reference time and a broadcasting signal is not received by the digital broadcasting receiver.

3. The method of claim 1, wherein the EPG information is sequentially extracted from digital broadcasting signals of channels, which are received in the digital broadcasting receiver, and is stored in the digital broadcasting receiver.

4. A digital broadcasting receiver comprising:
a tuner to receive digital broadcasting signals;
a controller to display a screen saver image on a display unit when it is necessary to display the screen saver image while allowing the tuner to receive the digital broadcasting signals in order to extract EPG information from the digital broadcasting signals; and
a memory to store the EPG information.

5. The digital broadcasting receiver of claim 4, wherein the digital broadcasting receiver includes a set-top box and an optical recoding/reproducing apparatus having the tuner.

6. The digital broadcasting receiver of claim 4, further comprising:
a remote signal receiver and an input unit,
wherein the controller determines that it is necessary to display the screen saver image when an idle time, during which a remote signal is not received in the remote signal receiver and the input unit is not operated, exceeds a reference time and the tuner is not operated.

7. The digital broadcasting receiver of claim 4, wherein the tuner sequentially receives the digital broadcasting signals from each of channels.

8. A digital broadcasting receiver comprising:
a controller to determine whether it is necessary to display a screen saver image on a display unit, and to display the screen saver image on the display unit when it is necessary to display the screen saver image while receiving digital broadcasting signals to update EPG information.

9. A digital broadcasting receiver comprising:
a tuner; and
a controller to control the tuner to receive broadcasting signals of channels according to an idle time, and to extract EPG information from the received broadcasting signals.

10. The digital broadcasting receiver of claim 9, wherein the idle time is a time period during which the tuner is controlled to receive the broadcasting signals of the channels.

11. The digital broadcasting receiver of claim 9, wherein the idle time is a time period during which a control command is not input to control at least one of the tuner and the controller.

12. The digital broadcasting receiver of claim 9, further comprising:
an input unit to generate a control command to control one of the tuner and the controller,
wherein the controller determines the idle time according to existence of the control command.

13. The digital broadcasting receiver of claim 9, wherein the controller generates a power save image and determines to control the tuner to receive the broadcasting signals of the channels, according to the idle time.

14. The digital broadcasting receiver of claim 13, wherein the controller simultaneously generates the power save image and controls the tuner to receive the broadcasting signals of the channels.

15. The digital broadcasting receiver of claim 13, wherein the controller determines the idle time according to a state of the power save image.

16. The digital broadcasting receiver of claim 13, further comprising:
an output terminal connectable to an external display to display an image corresponding to at least one of the power saver image and the broadcasting signals.

17. The digital broadcasting receiver of claim 13, further comprising:
a display to display at least one of the power save image, an image corresponding to at least one of the broadcasting signals, and the EPG information of the respective channels.

18. The digital broadcasting receiver of claim 9, further comprising:
at least one medium driver to generate a video signal; and
an output terminal to output a signal corresponding to one of the tuner, the at least one medium driver, and the controller,
wherein the controller determines the idle time according to a state of the signal to be output through the output terminal.

19. The digital broadcasting receiver of claim 18, further comprising:
an encoder to encode at least one of the video signal of the at least one medium and one of the broadcasting signals of the tuner, and to output the encoded one,
wherein the controller determines the idle time according to a state of the encoded one.

20. The digital broadcasting receiver of claim 18, wherein the at least one medium driver comprises a DVD driver, an HDD, a memory, and a DV processor.

21. The digital broadcasting receiver of claim 9, further comprising:
at least one medium driver to generate a video signal; and
wherein the controller determines the idle time according to existence of a signal generating according to the video signal of the at least one medium driver and at least one of the broadcasting signals of the tuner.

22. The digital broadcasting receiver of claim 9, when the controller controls the tuner to receive one of the broadcasting signals to correspond to only one of the channels when the controller determines that it is not the idle time.

23. The digital broadcasting receiver of claim 9, when the controller updates previous EPG information of the respective channels with the extracted EPG information of the respective channels.
